# EUROPEAN PATENT SPECIFICATION

(11) **EP 4 465 379 B1**
(45) Date of publication and mention of the grant of the patent: **06.05.2026**
(21) Application number: 23382458.0
(22) Date of filing: 16.05.2023
(51) Int. Cl.: H01M 4/131, H01M 4/1391, H01M 4/525, H01M 4/62, H01M 10/052, H01M 10/0565, H01M 4/02, H01M 4/505, H01M 4/58

(54) **POSITIVE ELECTRODE FOR SOLID-STATE BATTERIES AND SOLID-STATE BATTERIES COMPRISING THE SAME**
POSITIVE ELEKTRODE FÜR FESTKÖRPERBATTERIEN UND FESTKÖRPERBATTERIEN DIESELBE UMFASSEND
ÉLECTRODE POSITIVE POUR BATTERIES SOLIDES ET BATTERIES SOLIDES LA COMPRENANT

(43) Date of publication of application: 20.11.2024
(73) Proprietor: Fundación Cidetec, 20014 Donostia-San Sebastián (ES)
(72) Inventor: KVASHA, Andriy, 20014 DONOSTIA-SAN SEBASTIÁN (ES); THIEU, Tho, 20014 DONOSTIA-SAN SEBASTIÁN (ES); GARCÍA CALVO, Oihane, 20014 DONOSTIA-SAN SEBASTIÁN (ES); COMBARRO PALACIOS, Izaskun, 20014 DONOSTIA-SAN SEBASTIÁN (ES); COBOS, Mónica, 20014 DONOSTIA-SAN SEBASTIÁN (ES); GUTIÉRREZ, Antonio, 20014 DONOSTIA-SAN SEBASTIÁN (ES); URDAMPILLETA GONZALEZ, Idoia, 20014 DONOSTIA-SAN SEBASTIÁN (ES)
(74) Representative: ZBM Patents - Zea, Barlocci & Markvardsen

(56) References cited:
- FR-A1- 3 116 950
- KR-A- 20210 112 925
- US-A1- 2020 365 944

## Description

### Technical Field

The present disclosure relates to the field of solid-state lithium secondary batteries. In particular, it relates to a positive electrode comprising a cathode active material, a conductive additive, and a catholyte, as well to a process for its preparation, and to a solid-state lithium battery comprising said positive electrode.

### Background Art

Solid-state batteries (SSB) based on solid electrolytes, using a lithium-metal anode and high voltage cathodes, can potentially provide higher energy density and safety than lithium ion batteries with liquid electrolytes based on highly flammable organic solvents.

Composite positive electrodes for SSB typically comprise a cathode active material (CAM), a conductive additive such as carbon black, and a solid electrolyte (catholyte). To fulfil the requirements of high performance secondary batteries, the catholyte should have a high ionic conductivity, high chemical stability and wide electrochemical stability range. To provide sufficient ionic diffusion, positive electrode composites require a large catholyte fraction (30-50 vol%) and, consequently, the volume fraction of CAM of current SSB is relatively low, resulting in low energy density. Besides, the composite positive electrode should ideally have minimal void space and good CAM/catholyte contact, while including the minimum amount of catholyte needed to ensure sufficient transport of Li ions within the positive electrode structure.

SSBs require the development of high loading (such as ca. ≥2-3 mAh/cm²), ideally, non-porous solid state positive electrodes to have an excellent electrical contact between the electrode components. The electrode components providing the electronic conductivity (conductive additive(s)) and the ionic conductivity (catholyte) are forming two parallel 3D networks in intimate contact between them and with the CAM. In addition, the catholyte, surrounding and contacting the CAM and the conductive additive, should be chemically and electrochemically stable and, therefore, should contain chemically compatible components which simultaneously should provide sufficient level of ionic conductivity and be stable to the electrooxidation under harsh testing conditions (≥4.2V versus Li/Li⁺ reference electrode, >40 °C, long time exposure, high surface area, high pressure, etc.) in the SSB environment.

Although several SSB configurations have been disclosed in the available literature, stability of known catholytes (such as the ones containing polyethylene oxide (PEO)) in high voltage composite cathodes (for instance, containing lithium nickel manganese cobalt oxide (NMC) as CAM) is quite limited, especially at high temperature such as higher than 40°C.

FR3 116 950 A1, KR 2021 0112925 A and US 2020/365944 A1 refer to positive electrode compositions for lithium secondary batteries, comprising a high voltage cathode active material, a conductive additive, and a catholyte comprising a lithium salt dissolved in an organic solvent or an ionic liquid.

Therefore, there is still a strong need to improve the energy density and cyclability of solid-state batteries by achieving high loading composite positive electrodes while providing an improved stability at high voltages and enhanced electrochemical performance.

### Summary of Invention

The inventors have developed a high-voltage positive electrode which allows reaching a high loading (ca. 3 mAh/cm² or higher) suitable for solid state lithium-based batteries, the positive electrode being a composite comprising a high-voltage cathode active material, a conductive additive, and a catholyte, wherein the catholyte comprises a lithium salt, a specific polymer binder, and several types of plasticisers, these being (i) a room temperature ionic liquid (RTIL), (ii) a specific plastic crystal, and (iii), optionally, a high boiling point solvent. Advantageously, the positive electrode of the present disclosure has an improved electrochemical performance and, therefore, allows to improve the energy density and cyclability of lithium-based batteries, in particular, of lithium-metal solid state batteries.

Thus, a first aspect of the invention relates to a positive electrode comprising:
i) a high voltage cathode active material selected from lithium cobalt oxide LiCoO₂ (LCO); high-voltage spinel LiNi_{0.5}Mn_{1.5}O₄ (LNMO); lithium nickel manganese cobalt oxide LiNiₓMn_{y}Co_{1-x-y}O₂, wherein x+y+z=1 (NMC); lithium manganese iron phosphate LiFeₓMn_{y}PO₄, wherein x+y=1 (LMFP); and lithium-rich layered oxides Li₁₊ₓTM₁₋ₓO₂, wherein TM is a blend of at least two transition metals (LRLO), in particular, wherein the transition metals are selected from the group consisting of Mn, Ni, and Co; and combinations thereof;
ii) a conductive additive, and
iii) a high voltage-stable catholyte comprising:
   - a lithium salt selected from the group consisting of LiTFSI, LiBOB, LiDFOB; LiBF₄, LiFSI, LiClO₄, and combinations thereof;
   - a polymer binder, wherein the polymer binder is a PVdF co-polymer;
   - a room temperature ionic liquid;
   - a plastic crystal selected from the group consisting of succinonitrile, glutaronitrile, adiponitrile, pimelonitrile, suberonitrile, and mixtures thereof; and
   - optionally, a high boiling point solvent having a boiling point of at least 160 °C;
wherein the positive electrode is characterized by having a density from 2.3 to 3.6 g/cm³; in particular of 2.8 to 3.2 g/cm³.

Advantageously, the combination of the above mentioned components in the catholyte may favour the formation of a robust and stable "CAM/catholyte" interface.

Another aspect of the invention relates to a process for the preparation of the positive electrode as defined herein above and below, the process comprising the following steps:
i) providing a catholyte formulation comprising: the lithium salt, the polymer binder, the plastic crystal, the ionic liquid, and, optionally, the high boiling point solvent, in a suitable solvent;
ii) adding under stirring to the catholyte liquid formulation of step (i) the high voltage cathode active material, the conductive additive and, optionally, an additional amount of the suitable solvent in order to obtain a positive electrode slurry;
iii) casting the positive electrode slurry onto a positive electrode current collector and drying it in order to obtain a positive electrode;
iv) calendering the positive electrode in order to obtain a calendered positive electrode;
v) hot-pressing the calendered positive electrode in order to obtain the final positive electrode.

Another aspect of the invention relates to a battery comprising:
- a positive electrode as defined herein above and below,
- an anode, and
- a solid electrolyte interposed between the positive electrode and the anode.

Surprisingly, as can be seen from the examples and comparative examples, high voltage solid state secondary batteries comprising the positive electrode as defined in the present disclosure show a surprisingly good electrochemical performance at 60 °C.

Finally, another aspect of the invention relates to an article of manufacture comprising the battery as defined herein.

### Description of Drawings

Fig. 1 shows a scheme of the preparation of a positive electrode of the invention.
Fig. 2 shows the discharge capacity versus the cycle number of the Li/NMC622 solid state coin cells of Example 1 (Ex. 1, loading level (LL) LL of 3.0 mAh/cm², and density (D) D of 2.8 g/cm³), Example 2 (Ex. 2, LL of 3.0 mAh/cm², D of 3.0 g/cm³), and Comparative Example (Comp. Ex., LL of 3.0 mAh/cm², D of 2.8 g/cm³). The cycling conditions were as follows: 60°C, cycling interval 3.0-4.2 V, charge-discharge current is 0.05C/0.1C.

### Detailed description of the invention

All terms as used herein in this application, unless otherwise stated, shall be understood in their ordinary meaning as known in the art. Other more specific definitions terms as used in the present application are as set forth below and are intended to apply uniformly throughout the specification and claims unless an otherwise expressly set out definition provides a broader definition.

It is noted that, as used in this specification and the appended claims, the singular forms "a", "an", and "the" are to be construed to cover both the singular and the plural, unless otherwise indicated herein or clearly contradicted by context.

All percentages used herein are by weight of the total composition, unless otherwise designated.

As used herein, the term lithium nickel manganese cobalt oxides (also abbreviated Li-NMC, LNMC, or NMC) are mixed metal oxides of lithium, nickel, manganese and cobalt. They have the general formula LiNiₓMn_{y}Co_{z}O₂, wherein x+y+z=1. Examples of NMCs are LiNi_{0.333}Mn_{0.333}Co_{0.333}O₂ (abbreviated to NMC111 or NMC333), LiNi_{0.5}Mn_{0.3}Co_{0.2}O₂ (abbreviated to NMC532 or NCM523), LiNi_{0.6}Mn_{0.2}Co_{0.2}O₂ (NMC622), and LiNi_{0.8}Mn_{0.1}Co_{0.1}O₂ (NMC811).

As used herein, the term "conductive additive" refers to a material that is mixed with the cathode active material to improve the electronic conductivity of the positive electrode active layer and reduce the resistance of the positive electrode active layer and the resistance of interface with the current collector.

As used herein, the term "positive electrode active layer" refers to a layer situated on the surface of the positive electrode current collector which comprises a cathode active material.

As used herein, the term "solid electrolyte" refers to a solid with Li-ion conductivity and electronically insulating material located between the positive electrode and the anode.

As used herein, the term "catholyte" specifically means a sort of solid electrolyte contained in the positive electrode and refers to a Li-ion conductor (optionally could be a mixed ionic-electronic conductor) that is intimately mixed with, or that surrounds and contacts, the positive electrode active materials. The "catholyte" and the "solid electrolyte" in the same cell may the same or different compositions.

As used herein, the term "plastic crystal" refers to a crystal composed of weakly interacting molecules that possess some orientational or conformational degree of freedom. Plastic crystals can be considered a transitional stage between real solids and real liquids and can be considered as a soft matter.

As used herein, the term "high boiling point solvent" refers to a solvent having a boiling point of at least 160°C, in particular of more than 200 °C such as from 200°C to 300 °C.

As used herein, the term "high voltage-stable catholyte" refers to a catholyte which does not react at high voltage (4.2 V or higher versus Li/Li⁺ reference electrode) in a way that significantly reduces the electrochemical performance of the catholyte when held at high voltage (catholyte decomposition e.g. electrooxidation). The electrochemical stability of the catholyte is usually expressed by the width of the electrochemical window, that is, the difference between the oxidation and reduction potentials of the catholyte.

As used herein, the term "high voltage cathode active material" refers to a cathode active material which does not react at high voltage (4.2 V or higher versus Li/Li⁺ reference electrode) in a way that significantly reduces the electrochemical performance of the cathode when held at high voltage at 60 °C.

As used herein, the term "high voltage" means at least 4.2 V versus Li/Li⁺ reference electrode such a as 4.3, 4.4, 4.5, 4.6, 4.7, 4.8. 4.9, 5.0 V or higher.

As used herein, the term "chemically compatible" related to two or more components of a positive electrode means that the components can be physically exposed to each other without reacting in a way which significantly reduces the electrochemical performance of the battery containing the positive electrode.

As used herein, the terms "cell" and "battery" may be interchangeably used. The terms "solid-state lithium secondary cell (or battery)" may also be abbreviated to "cell", "battery" or "SSB".

The term "room temperature" refers to a temperature of about 20°C to about 30 °C.

Unless specially indicated, all materials and agents used in the present disclosure are commercially available.

As mentioned above, a first aspect relates to a positive electrode which allows reaching a high loading and having a relatively high density suitable for solid state lithium-based batteries, the positive electrode comprising a high-voltage cathode active material, a conductive additive, and a high voltage-stable catholyte, wherein the catholyte comprises a lithium salt, a specific polymer binder, and several types of plasticizers as defined above.

In an embodiment, the high voltage-stable catholyte further comprises a high boiling point solvent having a boiling point of at least 160 °C, in particular of more than 200 °C such as from 200 °C to 300 °C. In a particular embodiment, the high boiling point solvent is selected from the group consisting of propylene carbonate (PC), ethylene carbonate (EC), fluoroethylene carbonate (FEC), sulfolane (SL), and mixtures thereof.

In another embodiment, optionally in combination with one or more features of the embodiments defined above, the positive electrode loading is from 0.5 mAh/cm² to 10 mAh/cm². In another embodiment, the positive electrode loading is from 2.0 mAh/cm² to 5.0 mAh/cm². In another embodiment, the positive electrode loading is from from 2.5 mAh/cm² to 3.5 mAh/cm², such as of 3.0 mAh/cm².

### Catholyte

As mentioned above, the high voltage-stable catholyte comprises a lithium salt selected from the group consisting of LiTFSI, LiBOB, LiDFOB, LiBF₄, LiFSI, LiClO₄, and combinations thereof; a polymer binder which is a PVdF co-polymer; a RTIL; a plastic crystal selected from the group consisting of succinonitrile, glutaronitrile, adiponitrile, pimelonitrile, suberonitrile, and mixtures thereof; and, optionally, a high boiling point solvent as defined above.

In an embodiment, optionally in combination with one or more features of the embodiments defined above, the plastic crystal is selected from the group consisting of succinonitrile, glutaronitrile, adiponitrile, and any mixture thereof. More particularly, the plastic crystal is succinonitrile, glutaronitrile, or a mixture thereof, even more particularly, succinonitrile.

In another embodiment, optionally in combination with one or more features of the embodiments defined above, the plastic crystal is in an amount from 5 wt% to 20 wt% of the total weight of the cathode.

In an embodiment, the catholyte consists of:
- a lithium salt selected from the group consisting of LiTFSI, LiBOB, LiDFOB, LiBF₄, LiFSI, LiClO₄, and combinations thereof;
- a polymer binder, wherein the polymer binder is a PVdF co-polymer;
- a RTIL;
- a plastic crystal selected from the group consisting of succinonitrile, glutaronitrile, adiponitrile, pimelonitrile, suberonitrile, and mixtures thereof; and
- optionally, a high boiling point solvent as defined above.

The binder allows the components of the positive electrode to be firmly bound together and to is adhere the whole positive electrode to the solid electrolyte.

The polymer binder must be a polymer that is compatible with high voltage cathode materials and must have thermal stability at high temperatures such as at temperature higher than 60 °C.

In an embodiment, optionally in combination with one or more features of the embodiments defined above, the PVdF co-polymer is selected from the group consisting of poly(vinylidene fluoride-co-hexafluoropropylene) (PVdF-HFP), poly(vinylidene fluoride-co-chlorotrifluoroethylene) (PVdF-CTFE), poly(vinylidene fluoride-co-trifluoroethylene) (PVdF-TrFE), and mixtures thereof. In particular, the binder is PVdF-HFP.

In another embodiment, optionally in combination with one or more features of the embodiments defined above, the polymer binder is in an amount from 1 wt% to 7 wt% of the total weight of the cathode.

In another embodiment, optionally in combination with one or more features of the embodiments defined above, the RTIL is selected from the group consisting of:
1-ethyl-3-methylimidazolium bis(trifluoromethylsulfonyl)imide (EMI-TFSI);
1-methyl-3-propylimidazolium bis(trifluoromethylsulfonyl)imide (PMI TFSI);
1,2-dimethyl-3-propylimidazolium bis(trifluoromethylsulfonyl)imide (DMPI TFSI);
1-butyl-3-methylimidazolium bis(trifluoromethylsulfonyl)imide (BMI TFSI);
1-methyl-1-propylpyrrolidinium bis(trifluoromethylsulfonyl)imide (PYR₁₃TFSI);
1-butyl-1-methylpyrrolidinium bis(trifluoromethylsulfonyl)imide (PYR₁₄TFSI);
1-methyl-1-propylpiperidinium bis(trifluoromethylsulfonyl)imide (PP₁₃TFSI);
1-ethyl-3-methylimidazolium bis(fluorosulfonyl)imide (EMI-FSI);
1-methyl-3-propylimidazolium bis(fluorosulfonyl)imide (PMI FSI);
1,2-dimethyl-3-propylimidazolium bis(fluorosulfonyl)imide (DMPI FSI);
1-butyl-3-methylimidazolium bis(fluorosulfonyl)imide (BMI FSI);
1-methyl-1-propylpyrrolidinium bis(fluorosulfonyl)imide (PYR₁₃FSI);
1-butyl-1-methylpyrrolidinium bis(fluorosulfonyl)imide (PYR₁₄FSI);
1-methyl-1-propylpiperidinium bis(fluorosulfonyl)imide (PP₁₃FSI); and combinations thereof. In another embodiment, the room temperature ionic liquid is PYR₁₄TFSI.

In another embodiment, optionally in combination with one or more features of the embodiments defined above, the RTIL is in an amount from 1 wt% to 20 wt% of the total weight of the cathode.

In another embodiment, optionally in combination with one or more features of the embodiments defined above, the total amount of RTIL, plastic crystal, and, optionally, high boiling point solvent is from 1 wt% to 20 wt% of the total weight of the cathode.

In another embodiment, optionally in combination with one or more features of the embodiments defined above, the lithium salt comprises LiBOB, in particular, the lithium salt is a mixture of LiBOB and LiTFSI, more particularly, the lithium salt consists of LiBOB. As mentioned above, the inventors believe that stabilization of the "CAM/catholyte" interphase is achieved by the combined action of the catholyte components. This effect seems to be particularly good when LiBOB is used as lithium salt.

It has been reported in the literature that the use of LiBOB in solid electrolytes, in particular in combination with a PVdF co-polymer such as PVdF-HFP, has an adverse effect on the performance of solid-state lithium-based batteries (see, for instance, T. Lestariningsih, Q. Sabrina, C. R. Ratri, A. Subhan, and S. Priyono, "The Effect of LiBOB Addition on Solid Polymer Electrolyte (SPE) Production based PVdF-HFP/TIO2/LiTFSI on Ionic Conductivity for Lithium-Ion Battery Applications," JurnalKimia Sains dan Aplikasi, vol. 25, no. 1, pp. 13-19 (2022); and Lestariningsih, Titik et al. "The Effects of LiBOB and LiTFSI Compositions on the Conductivity of PVdF-HFP based Electrolyte Polymer Membrane for Lithium Ion Battery Applications." International Journal of Scientific & Technology Research 9 (2020) 165-169).

Surprisingly, despite the negative effects of the partial or total replacement of LiTFSI by LiBOB on the properties of solid electrolytes, as shown in the examples, the use of LiBOB in the catholyte of the positive electrode of the present disclosure has an unexpectedly beneficial effect on the electrochemical performance of the positive electrode in the solid state batteries.

In another embodiment, optionally in combination with one or more features of the embodiments defined above, the electrolyte salt is in an amount from 1 wt% to 15 wt% of the total weight of the cathode.

### Positive electrode

In an embodiment, optionally in combination with one or more features of the embodiments defined above, the high voltage cathode active material is NMC, particularly a single crystal NMC.

As used herein, the term "single crystal" refers to ideally monolithic particles of 2-5 µm in size that, ideally, have no grain boundaries and secondary particles. Single crystal cathode active materials are believed to maintain particle integrity during the cell cycling. Single crystal NMC materials in the form of powder are commercially available.

There is no specific limitation to the conductive additives, and those which are known for use in lithium secondary batteries may be used.

Examples of conductive additives include, without being limited to, carbon black, acetylene black, Ketjen black, graphite, graphene, carbon nanotubes, carbon nanofibers, vapour grown carbon fibers (VGCF), and combinations thereof.

In an embodiment, optionally in combination with one or more features of the embodiments defined above, the amount of catholyte in the positive electrode is from 0.5 wt% to 30 wt% with respect to the total weight of the positive electrode active layer.

In another embodiment, optionally in combination with one or more features of the embodiments defined above, in the positive electrode of the present disclosure, the catholyte is in an amount from 5 wt% to 50 wt% with respect to the total weight of positive electrode; the high voltage cathode active material is in an amount from 50 wt% to 90 wt% of the total weight of the positive electrode; and the conductive additive is in an amount from 0.1 wt% to 5 wt% of the total weight of the positive electrode.

### Process for the preparation of the positive electrode

As mentioned above, another aspect of the present disclosure relates to a process for the preparation of a positive electrode as defined herein above, the process comprising the following steps:
i) providing a catholyte formulation comprising: the lithium salt, the polymer binder, the plastic crystal, the ionic liquid, and, optionally, the high boiling point solvent, in a suitable solvent;
ii) adding under stirring to the catholyte liquid formulation of step (i) the high voltage cathode active material, the conductive additive and, optionally, an additional amount of the suitable solvent in order to obtain a positive electrode slurry;
iii) casting the positive electrode slurry onto a positive electrode current collector and drying it in order to obtain a positive electrode;
iv) calendering the positive electrode in order to obtain a calendered positive electrode;
v) hot-pressing the calendered positive electrode in order to obtain the final positive electrode.

In the process of the present disclosure, the lithium salt, the polymer binder, the plastic crystal, the ionic liquid, and, optionally, the high boiling point solvent, the cathode active material, and the conductive additive are as defined above.

The calendering step can be carried out in a standard calender having at least two rotating cylinders (rolls) by passing and compacting the cathode intermediate between the rolls. The calendering step can be carried out at a temperature from 15 °C to 80 °C, such from 40 °C to 60 °C, a pressure from 20 bar to 70 bar.

The hot-pressing step can be carried out at a temperature from 50 °C to 160 °C and at a pressure from 10 bar to 200 bar.

In an embodiment of the process of the present disclosure, step (i) is carried out by:
- dissolving the lithium salt in a suitable solvent to obtain a first solution;
- dissolving the polymer binder in a suitable solvent to obtain a second solution; and
- mixing the first solution and the second solution and then, adding under stirring the plastic crystal, the ionic liquid, and, optionally, the high boiling point solvent, in order to obtain a catholyte formulation.

Examples of suitable solvents include, without being limited to: N-Methyl-2-pyrrolidone (NMP), N,N-Dimethylformamide (DMF), acetonitrile (ACN), and mixtures thereof.

The process of the present disclosure ensures small particle sizes and good particle dispersion of the components and allows obtaining a cathode with a minimal void space, namely a substantially non-porous structure with an excellent electrical contact between the electrode components. At the same time, it allows including in the cathode the needed amount of catholyte to ensure sufficient Li ions diffusion between the CAM and the solid electrolyte.

The process of the present disclosure is easily scalable and, advantageously, can be carried out by one pot slurry preparation and casting using a roll-to-roll (R2R) process, what allows reducing the manufacturing costs. Additionally, by the combination of the two post-processing steps, calendaring and hot-pressing, the internal contact between the positive electrode components is highly improved. Besides, the combined effect of the positive electrode containing the catholyte disclosed above and the process for its preparation allows providing solid state cells with a significantly improved cyclability under harsh cycling conditions (60 °C, cell charge cut-off voltage ≥4.2 V).

The positive electrode obtainable by the process mentioned above also forms part of the invention.

### Solid-state secondary battery

As mentioned above, another aspect of the invention relates to a battery, in particular, a solid-state secondary battery, comprising a positive electrode as defined above, an anode, and a solid electrolyte interposed between the positive electrode and the anode.

The battery of the present disclosure can optionally contain further additives as long as they do not adversely affect the electrochemical properties of the battery. The further additives can be contained within or between any of the positive electrode, the anode, and the solid electrolyte.

In an embodiment, the solid-state secondary battery of the present disclosure comprises an anode; a solid electrolyte in direct contact with the anode; a positive electrode current collector; a solid state positive electrode in direct contact with the positive electrode current collector; a solid electrolyte in direct contact with the solid state positive electrode, the solid state positive electrode being positioned between the positive electrode current collector and the solid electrolyte; the solid electrolyte being positioned between the anode and the positive electrode.

### Anode

There is no specific limitation to the anode material suitable for the present disclosure. Thus, the anode can be made of graphite, silicon, silicon oxide, lithium-titanium-oxide (LTO), or can be a lithium-based anode. In particular, lithium-based electrode materials which are known for use in lithium secondary batteries may be used. Thus, in an embodiment, the anode material is a lithium-based anode. Examples of useful lithium-based anodes include, without being limited to, a lithium metal, a lithium metal alloy (such as with Mg, Al, Sn, or a mixture thereof), and combinations thereof. In an embodiment, the anode material is Li metal.

### Solid electrolyte

The solid electrolyte allows the transport of lithium ions between the positive electrode and the anode and also serves as a physical separator between the positive electrode and anode.

Any solid electrolyte known for use in lithium-based secondary batteries may be used as long as they are lithium ion-conducting materials and fulfil the requirements needed for high voltage, such as a high stability.

The solid electrolyte and the catholyte disclosed herein may have the same of different compositions. Thus, all the embodiments defined above for the catholyte apply, independently, to the solid electrolyte.

In an embodiment, optionally in combination with one or more features of the embodiments defined above, the solid electrolyte has the same composition than the catholyte.

The lithium-based secondary battery of the present disclosure can be obtained by assembling a positive electrode as defined above, an anode as defined above, and a solid electrolyte interposed between the positive electrode and the anode. The battery of the present disclosure can also be obtained by stacking multiple layers of the positive electrode, the solid electrolyte, and the anode.

The lithium secondary battery obtainable by the process mentioned above also forms part of the invention.

In the present disclosure, it is noted that when discussing the catholyte-comprising positive electrode, the battery comprising it, and the process for preparing the positive electrode or the battery, each one of the embodiments or features defined for any of the mentioned aspects can be considered applicable to any one of the other aspects, whether they are explicitly discussed in the context of that other aspect or not.

The SSB according to the present disclosure may be used in multiple energy storage systems such as in consumer electronics (e.g., mobile phones, tablets, and laptop computers), drones, electric vertical take-off and landing (eVTOL) aircrafts, and electrified vehicles such hybrid electric vehicles (HEV), plug-in hybrid electric vehicles (PHEV), battery electric vehicles (BEVs), mild-hybrid electric vehicle (MHEV), and extended range electric vehicles (E-REV).

Throughout the description and claims the word "comprise" and variations of the word, are not intended to exclude other technical features, additives, components, or steps. Furthermore, the term "comprise" encompasses the terms "consisting of" and "consisting essentially of". The product and process according to the present disclosure can comprise, consist of, and consist essentially of the essential technical features and/or limitations of the present disclosure described herein, as well as any additional and/or optional ingredients, components, steps, or limitations described herein.

The following examples and drawings are provided by way of illustration, and they are not intended to be limiting of the present invention. Furthermore, the present invention covers all possible combinations of particular and preferred embodiments described herein.

### Examples

### Materials

N-Methyl-2-pyrrolidone (NMP) and acetonitrile (ACN) solvent was acquired from Scharlab. The single crystal (monolithic) cathode active material NMC622 (TSC) was purchased from Targray. Lithium bis(oxalato)borate (LiBOB), poly(vinylidene fluoride-co-hexafluoropropylene) (PVdF-HFP, pellets), poly(ethylene oxide) (PEO, Mn 4.10⁵ g·mol⁻¹) and succinonitrile (SN, 99% purity) were purchased from Sigma Aldrich. The ionic liquid 1-butyl-1-methylpyrrolidinium bis(trifluoromethylsulfonyl)imide (PYR₁₄TFSI, 99.9% purity) and bis(trifluoromethane) sulfonimide lithium salt (LiTFSI, 99.9% purity) were purchased from Solvionic. Conductive additive C-ENERGY Super C45 carbon black was bought from IMERYS Carbon & Graphite. All chemicals were used as received without further purification. High-purity lithium metal foil with thickness of 50 µm (supplied by Albemarle) was employed as negative electrode as received.

### Experimental section

A NMP based slurry composed by 74 wt% of TSC, 3 wt% of C45 carbon black and 23 wt% of catholyte was prepared in a dry room with a dew point below -50 °C. The positive electrode formulation and function of each component of positive electrodes used in Ex. 1 and Ex. 2 is shown in Table 1.

**Table 1**

| Component | | wt% | Function |
|---|---|---|---|
| NMC622/811 | | 74 | Cathode active material (preferably monolithic) |
| Carbon black | | 3 | Conductive additive (electronic transport) |
| Catholyte | Total | 23 | Ionic transport |
| | PVdF-HFP | 3.5 | Binder and polymer matrix for catholyte |
| | LiBOB (or LiTFSI) | 3.5 | Source of Li ions |
| | PYR₁₄TFSI | 8 | Plasticizer |
| | SN | 8 | Plasticizer |
| Al foil (carbon coated) | | --- | Current collector |

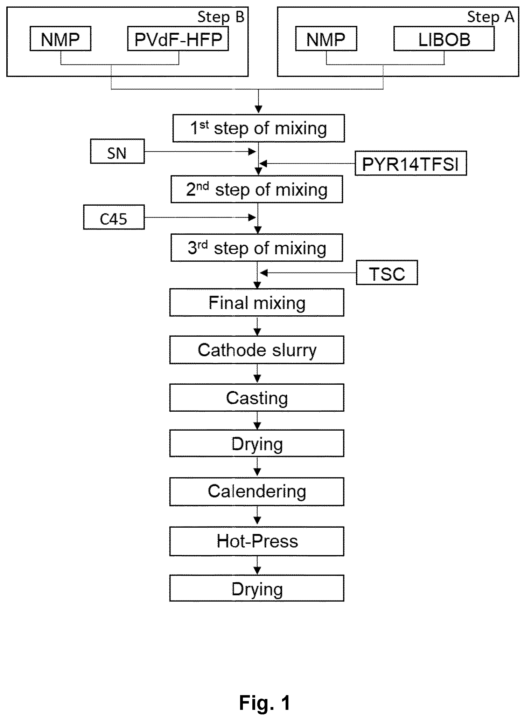

For this purpose, the pre-dissolution of the binder and lithium salt was initially prepared. The required amount of LIBOB or LITFSI (3.5 wt% of the final positive electrode) was dissolved in NMP solvent under magnetic stirring (VELP Scientifica stirring plate, F203A0178) until the complete dissolution of the salt (Figure 1, step A).

Simultaneously, a dissolution of PVdF-HFP polymer was prepared at 10 wt% in NMP. In this case, mechanical stirring (IKA Eurostar 60 digital) was employed to reach the dissolution of the polymer (3.5 wt% of the final positive electrode) (Figure 1, step B).

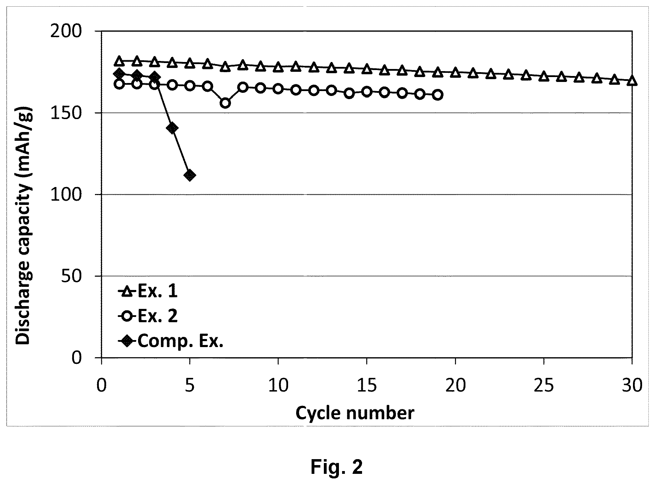

The process continued with the preparation of the catholyte using mechanical stirring. In a baker the required amount of the PVdF-HFP solution and LiBOB or LITFSI solution were mixed (Figure 1, 1^{st} step of mixing). Then, SN and PYR₁₄TFSI were directly added, and the mixture was left under mechanical stirring (Figure 1, 2^{nd} step of mixing). Once the catholyte mixture was completed, 3 wt% of C45 conductive additive was added, as well as small amounts of NMP to set the desired solid/liquid (S/L) ratio (Figure 1, 3^{rd} step of mixing). The active material, TSC, was then added and the mixture was again left under stirring (Figure 1, final mixing).

Lastly, the well homogenized positive electrode slurry was cast onto a carbon-coated aluminium current collector (Gelon) with a thickness of 20 µm using an automatic film applicator (BEVS 1881/2) (Figure 1, casting). The electrode was dried in a convection oven (Selecta, Digitronic TFT) at 100°C for 30 minutes (Figure 1, drying).

The obtained positive electrode with target loading of 3.0 mAh·cm⁻² (21 mg_{TSC}·cm⁻²) was compressed at 45°C by a laboratory hydraulic roll calender (DPM Solutions) (Figure 1, calendering). Then, to reach the target density of 3.0±0.2 g·cm⁻³, the calendered positive electrode was finally hot-pressed (Laborpresse, Polystat 200T) at 140°C with a pressure of 100 bar (Figure 1, hot-press).

The preparation of the comparative example (Comp. Ex.) composed by 75 wt% of TSC, 5 wt% of C45 carbon black, 15 wt% of polymer binder PEO and 5 wt% of LiTFSI salt was carried out in a dry room with a dew point below -50°C using acetonitrile (ACN) as solvent. A 10 wt% PEO solution was initially prepared in ACN by mechanical stirring (IKA Eurostar 60 digital) and another solution of the LiTFSI salt (5.0 wt% of the final positive electrode) was prepared separately with magnetic stirring. When the polymer binder was completely dissolved, the lithium salt solution was added, and the mixture was left under stirring. Then, 5 wt% of C45 conductive additive was added to the mixture, as well as small quantities of ACN. The active material TSC (75 wt% of the final positive electrode) was added to the mixture which was left under stirring again. Finally, following the post-processing steps as in the examples, the well-homogenised positive electrode slurry was casted onto a carbon-coated aluminium current collector (Gelon) employing an automatic film applicator (BEVS 1881/2). Then the electrode was dried in a convection oven (Selecta, Digitronic TFT) at 60 °C.

The obtained positive electrode with target loading of 3.0 mAh·cm⁻² (21 mgTSC·cm⁻²) was compressed at 45°C using a laboratory hydraulic roll calender (DPM Solutions). Finally, the calendered positive electrode was hot-pressed (Laborpresse, Polystat 200T) at 50 °C with a pressure of 100 bar.

The positive electrode formulations specified in Table 2 where prepared.

**Table 2**

| **Formul.** | Composition in wt% | | | | | | | |
|---|---|---|---|---|---|---|---|---|
| | NMC622 | C45 | PVdF-HFP | LiBOB | PYR₁₄TFSI | SN | PEO | LiTFSI |
| | (TSC) | | | | | | | |
| **Ex. 1** | 74.0 | 3.0 | 3.5 | 3.5 | 8.0 | 8.0 | ---- | ---- |
| **Ex. 2** | 74.0 | 3.0 | 3.5 | ---- | 8.0 | 8.0 | ---- | 3.5 |
| **Comp. Ex.** | 75.0 | 5,0 | ---- | ---- | ---- | ---- | 15.0 | 5.0 |

### Preparation of a solid state coin cell

The prepared solid state positive electrodes were tested in lithium metal solid state coin cells (2025, Hohsen). Before coin cell assembly, the positive electrodes were dried under dynamic vacuum (Binder, VD056-230V) (Figure 1, drying) in the dry room. Then, the coin cells were assembled using the final positive electrodes, a 200 micron thick solid electrolyte films composed by 23.4 wt% of PVdF-HFP, 23.4 wt% of SN, 15.6 wt% of LiTFSI, and 37.5 wt% of PYR₁₄TFSI, and a Li metal foil with thickness of 50 microns. All operations during cell assembly process were performed under dry room condition with dew point below -50 °C. Once assembled, the cells were kept for 3 h at 60 °C to ensure a good electrical contact between all cell components. Afterwards, galvanostatic charge-discharge test was performed on the cell using BaSyTec cell test system (Germany) within 3.0-4.2 V cycling range under 0.05C/0.1C charge-discharge rates at the same temperature.

### Results

The electrochemical performance of the solid state coin cells with different electrodes is depicted in Figure 2.

The coin cell based on the positive electrode of Example 1 (catholyte is based on PVdF-HFP, PYR₁₄TFSI, SN, and LiBOB) demonstrated the best performance in terms of discharge capacity and capacity retention. The coin cell based on the positive electrode of Example 2 (catholyte is based on PVdF-HFP, PYR₁₄TFSI, SN, and LiTFSI) delivered lower discharge capacity and similar capacity retention in comparison with the cell based on the positive electrode of Example 1. The cell equipped with the positive electrode of the Comparative Example (catholyte is based on PEO and LiTFSI) showed relevant discharge capacity on the first cycle, however, the worst cyclability due to poor electrochemical stability of the PEO-LiTFSI catholyte.

### Citation List

1. T. Lestariningsih, Q. Sabrina, C. R. Ratri, A. Subhan, and S. Priyono, "The Effect of LiBOB Addition on Solid Polymer Electrolyte (SPE) Production based PVdF-HFP/TiO2/LiTFSI on Ionic Conductivity for Lithium-Ion Battery Applications," Jurnal Kimia Sains dan Aplikasi, vol. 25, no. 1, pp. 13-19 (2022).
2. Lestariningsih, Titik et al. "The Effects of LiBOB and LiTFSI Compositions on the Conductivity of PVDF-HFP based Electrolyte Polymer Membrane for Lithium Ion Battery Applications." International Journal of Scientific & Technology Research 9 (2020) 165-169.

## Claims

1. A positive electrode comprising
i) a high voltage cathode active material selected from lithium cobalt oxide LiCoO₂ (LCO); high-voltage spinel LiNi_{0.5}Mn_{1.5}O₄ (LNMO); lithium nickel manganese cobalt oxide LiNiₓMn_{y}Co_{z}O₂, wherein x+y+z=1 (NMC); lithium manganese iron phosphate LiFeₓMn_{y}PO₄, wherein x+y=1 (LMFP); and lithium-rich layered oxides Li₁₊ₓTM₁₋ₓO₂, wherein TM is a blend of at least two transition metals (LRLO), in particular, wherein the transition metals are selected from the group consisting of Mn, Ni, and Co; and combinations thereof; and combinations thereof;
ii) a conductive additive, and
iii) a high voltage-stable catholyte comprising:
- a lithium salt selected from the group consisting of LiTFSI, LiBOB, LiDFOB; LiBF₄, LiFSI, LiClO₄, and combinations thereof;
- a polymer binder, wherein the polymer binder is a PVdF co-polymer;
- a room temperature ionic liquid;
- a plastic crystal selected from the group consisting of succinonitrile, glutaronitrile, adiponitrile, pimelonitrile, suberonitrile, and mixtures thereof; and
- optionally, a high boiling point solvent having a boiling point of at least 160 °C;
wherein the positive electrode is **characterized by** having a density from 2.3 g/cm³ to 3.6 g/cm³.

2. The positive electrode according to claim 1, wherein the positive electrode has an active material loading from 0.5 mAh/cm² to 10 mAh/cm².

3. The positive electrode according to claims 1 or 2, wherein the PVdF co-polymer is selected from the group consisting of poly(vinylidene fluoride-co-hexafluoropropylene) (PVdF-HFP), poly(vinylidene fluoride-co-chlorotrifluoroethylene) (PVdF-CTFE), poly(vinylidene fluoride-co-trifluoroethylene) (PVdF-TrFE), and mixtures thereof.

4. The positive electrode according to any one of claims 1 to 3, wherein the polymer binder is in an amount from 1 wt% to 7 wt% of the total weight of the cathode;
optionally, wherein the binder is PVdF-HFP.

5. The positive electrode according to any one of claims 1 to 4, wherein the room temperature ionic liquid is selected from the group consisting of:
1-ethyl-3-methylimidazolium bis(trifluoromethylsulfonyl)imide (EMI-TFSI);
1-methyl-3-propylimidazolium bis(trifluoromethylsulfonyl)imide (PMI TFSI);
1,2-dimethyl-3-propylimidazolium bis(trifluoromethylsulfonyl)imide (DMPI TFSI);
1-butyl-3-methylimidazolium bis(trifluoromethylsulfonyl)imide (BMI TFSI);
1-methyl-1-propylpyrrolidinium bis(trifluoromethylsulfonyl)imide (PYR₁₃TFSI);
1-butyl-1-methylpyrrolidinium bis(trifluoromethylsulfonyl)imide (PYR₁₄TFSI);
1-methyl-1-propylpiperidinium bis(trifluoromethylsulfonyl)imide (PP₁₃TFSI);
1-ethyl-3-methylimidazolium bis(fluorosulfonyl)imide (EMI-FSI);
1-methyl-3-propylimidazolium bis(fluorosulfonyl)imide (PMI FSI);
1,2-dimethyl-3-propylimidazolium bis(fluorosulfonyl)imide (DMPI FSI);
1-butyl-3-methylimidazolium bis(fluorosulfonyl)imide (BMI FSI);
1-methyl-1-propylpyrrolidinium bis(fluorosulfonyl)imide (PYR₁₃FSI);
1-butyl-1-methylpyrrolidinium bis(fluorosulfonyl)imide (PYR₁₄FSI);
1-methyl-1-propylpiperidinium bis(fluorosulfonyl)imide (PP₁₃FSI);
and combinations thereof.

6. The positive electrode according to claim 5, wherein the room temperature ionic liquid is PYR₁₄TFSI.

7. The positive electrode according to any one of claims 1 to 6, wherein the total amount of RTIL, plastic crystal, and, optionally, high boiling point solvent is from 1 wt% to 20 wt% of the total weight of the cathode.

8. The positive electrode according to any one of claims 1 to 7, wherein the lithium salt comprises LiBOB, in particular, wherein the lithium salt is a mixture of LiBOB and LiTFSI, more particularly, wherein the lithium salt is LiBOB.

9. The positive electrode according to any one of claims 1 to 8, wherein the electrolyte salt is in an amount from 1 wt% to 15 wt% of the total weight of the cathode.

10. The positive electrode according to any one of claims 1 to 9, wherein the high voltage cathode active material is NMC, particularly a single crystal NMC.

11. The positive electrode according to any one of claims 1 to 10, wherein the catholyte is in an amount from 5 wt% to 50 wt% with respect to the total weight of positive electrode; the high voltage cathode active material is in an amount from 50 wt% to 90 wt% of the total weight of the positive electrode; and the conductive additive is in an amount from 0.1 wt% to 5 wt% of the total weight of the positive electrode.

12. A process for the preparation of a positive electrode as defined in any one of claims 1 to 11, the process comprising the following steps:
i) providing a catholyte formulation comprising: the lithium salt, the polymer binder, the plastic crystal, the ionic liquid, and, optionally, the high boiling point solvent, in a suitable solvent;
ii) adding under stirring to the catholyte liquid formulation of step (i) the high voltage cathode active material, the conductive additive and, optionally, an additional amount of the suitable solvent in order to obtain a positive electrode slurry;
iii) casting the positive electrode slurry onto a positive electrode current collector and drying it in order to obtain a positive electrode;
iv) calendering the positive electrode in order to obtain a calendered positive electrode;
v) hot-pressing the calendered positive electrode in order to obtain the final positive electrode.

13. A battery comprising:
- a positive electrode as defined in any one of claims 1 to 11,
- an anode, and
- a solid electrolyte interposed between the positive electrode and the anode.

14. The battery according to claim 13, wherein the solid electrolyte and the catholyte have the same composition.

15. An article of manufacture comprising the battery as defined in claim 14.

## Patentansprüche

1. Positive Elektrode, umfassend
i) ein aktives Hochspannungskathodenmaterial, ausgewählt aus Lithiumkobaltoxid LiCoO₂ (LCO); Hochspannungsspinell LiNi_{0.5}Mn_{1.5}O₄ (LNMO); Lithium-Nickel-Mangan-Kobalt-Oxid LiNiₓMn_{y}Co_{z}O₂, wobei x+y+z=1 (NMC); Lithium-Mangan-Eisenphosphat LiFeₓMn_{y}PO₄, wobei x+y=1 (LMFP); und lithiumreiche geschichtete Oxide Li₁₊ₓTM₁₋ₓO₂, wobei TM eine Mischung aus mindestens zwei Übergangsmetallen (LRLO) ist, insbesondere wobei die Übergangsmetalle aus der Gruppe bestehend aus Mn, Ni und Co ausgewählt sind; und Kombinationen davon; und Kombinationen davon;
ii) ein leitfähiges Additiv, und
iii) einen hochspannungsstabilen Katholyten, umfassend:
- ein Lithiumsalz ausgewählt aus der Gruppe bestehend aus LiTFSI, LiBOB, LiDFOB; LiBF₄, LiFSI, LiClO₄ und Kombinationen davon;
- ein Polymerbindemittel, wobei das Polymerbindemittel ein PVdF-Copolymer ist;
- eine ionische Flüssigkeit bei Raumtemperatur;
- einen Kunststoffkristall, ausgewählt aus der Gruppe bestehend aus Succinonitril, Glutaronitril, Adiponitril, Pimelonitril, Suberonitril und Gemischen davon; und
- gegebenenfalls ein hochsiedendes Lösungsmittel mit einem Siedepunkt von mindestens 160 °C;
wobei die positive Elektrode **dadurch gekennzeichnet ist, dass** sie eine Dichte von 2,3 g/cm³ bis 3,6 g/cm³ aufweist.

2. Positive Elektrode nach Anspruch 1, wobei die positive Elektrode eine aktive Materialladung von 0,5 mAh/cm² bis 10 mAh/cm² aufweist.

3. Positive Elektrode nach Anspruch 1 oder 2, wobei das PVdF-Copolymer ausgewählt ist aus der Gruppe bestehend aus Poly(vinylidenfluorid-co-hexafluorpropylen) (PVdF-HFP), Poly(vinylidenfluorid-co-chlortrifluorethylen) (PVdF-CTFE), Poly(vinylidenfluorid-co-trifluorethylen) (PVdF-TrFE) und Gemischen davon.

4. Positive Elektrode nach einem der Ansprüche 1 bis 3, wobei das Polymerbindemittel in einer Menge von 1 Gew.-% bis 7 Gew.-% des Gesamtgewichts der Kathode vorliegt; wobei das Bindemittel gegebenenfalls PVdF-HFP ist.

5. Positive Elektrode nach einem der Ansprüche 1 bis 4, wobei die ionische Flüssigkeit bei Raumtemperatur ausgewählt ist aus der Gruppe bestehend aus:
1-Ethyl-3-methylimidazolium-bis(trifluormethylsulfonyl)imid (EMI-TFSI);
1-Methyl-3-propylimidazolium-bis(trifluormethylsulfonyl)imid (PMI TFSI);
1,2-Dimethyl-3-propylimidazolium-bis(trifluormethylsulfonyl)imid (DMPI TFSI);
1-Butyl-3-methylimidazolium-bis(trifluormethylsulfonyl)imid (BMI TFSI);
1-Methyl-1-propylpyrrolidinium-bis(trifluormethylsulfonyl)imid (PYR₁₃TFSI);
1-Butyl-1-methylpyrrolidinium-bis(trifluormethylsulfonyl)imid (PYR₁₄TFSI);
1-Methyl-1-propylpiperidinium-bis(trifluormethylsulfonyl)imid (PP₁₃TFSI);
1-Ethyl-3-methylimidazolium-bis(fluorsulfonyl)imid (EMI-FSI);
1-Methyl-3-propylimidazolium-bis(fluorsulfonyl)imid (PMI FSI);
1,2-Dimethyl-3-propylimidazolium-bis(fluorsulfonyl)imid (DMPI FSI);
1-Butyl-3-methylimidazolium-bis(fluorsulfonyl)imid (BMI FSI);
1-Methyl-1-propylpyrrolidinium-bis(fluorsulfonyl)imid (PYR₁₃FSI);
1-Butyl-1-methylpyrrolidinium-bis(fluorsulfonyl)imid (PYR₁₄FSI);
1-Methyl-1-propylpiperidinium-bis(fluorsulfonyl)imid (PP₁₃FSI);
und Kombinationen davon.

6. Positive Elektrode nach Anspruch 5, wobei die ionische Flüssigkeit bei Raumtemperatur PYR₁₄TFSI ist.

7. Positive Elektrode nach einem der Ansprüche 1 bis 6, wobei die Gesamtmenge an RTIL, Kunststoffkristall und gegebenenfalls an hochsiedendem Lösungsmittel 1 Gew.-% bis 20 Gew.-% des Gesamtgewichts der Kathode beträgt.

8. Positive Elektrode nach einem der Ansprüche 1 bis 7, wobei das Lithiumsalz LiBOB umfasst, insbesondere, wobei das Lithiumsalz ein Gemisch aus LiBOB und LiTFSI ist, besonders bevorzugt, wobei das Lithiumsalz LiBOB ist.

9. Positive Elektrode nach einem der Ansprüche 1 bis 8, wobei das Elektrolytsalz in einer Menge von 1 Gew.-% bis 15 Gew.-% des Gesamtgewichts der Kathode vorliegt.

10. Positive Elektrode nach einem der Ansprüche 1 bis 9, wobei das aktive Hochspannungskathodenmaterial NMC ist, insbesondere ein Einkristall-NMC.

11. Positive Elektrode nach einem der Ansprüche 1 bis 10, wobei der Katholyt in einer Menge von 5 Gew.-% bis 50 Gew.-%, bezogen auf das Gesamtgewicht der positiven Elektrode, vorliegt; das aktive Hochspannungskathodenmaterial in einer Menge von 50 Gew.-% bis 90 Gew.-% des Gesamtgewichts der positiven Elektrode vorliegt; und das leitfähige Additiv in einer Menge von 0,1 Gew.-% bis 5 Gew.-% des Gesamtgewichts der positiven Elektrode vorliegt.

12. Verfahren zur Herstellung einer positiven Elektrode nach einem der Ansprüche 1 bis 11, wobei das Verfahren die folgenden Schritte umfasst:
i) Bereitstellen einer Katholytenformulierung, umfassend: das Lithiumsalz, das Polymerbindemittel, den Kunststoffkristall, die ionische Flüssigkeit und gegebenenfalls das hochsiedende Lösungsmittel, in einem geeigneten Lösungsmittel;
ii) Hinzufügen des aktiven Hochspannungskathodenmaterials, des leitfähigen Additivs und gegebenenfalls einer zusätzlichen Menge des geeigneten Lösungsmittels unter Rühren zu der flüssigen Katholytenformulierung aus Schritt (i), um eine positive Elektrodenaufschlämmung zu erhalten;
iii) Gießen der positiven Elektrodenaufschlämmung auf einen Stromabnehmer für die positive Elektrode und Trocknen derselben, um eine positive Elektrode zu erhalten;
iv) Kalandrieren der positiven Elektrode, um eine kalandrierte positive Elektrode zu erhalten;
v) Heißpressen der kalandrierten positiven Elektrode, um die endgültige positive Elektrode zu erhalten.

13. Batterie, umfassend:
- eine positive Elektrode nach einem der Ansprüche 1 bis 11,
- eine Anode, und
- einen festen Elektrolyten, der zwischen der positiven Elektrode und der Anode eingefügt ist.

14. Batterie nach Anspruch 13, wobei der feste Elektrolyt und der Katholyt die gleiche Zusammensetzung aufweisen.

15. Herstellungserzeugnis, umfassend die Batterie nach Anspruch 14.

## Revendications

1. Électrode positive comprenant
i) un matériau actif de cathode haute tension choisi parmi l'oxyde de lithium-cobalt LiCoO₂ (LCO) ; le spinelle haute tension LiNi_{0.5}Mn_{1.5}O₄ (LNMO) ; l'oxyde de lithium-nickel-manganèse-cobalt LiNiₓMn_{y}Co_{z}O₂, où x+y+z=1 (NMC) ; le phosphate de lithium-manganèse-fer LiFeₓMn_{y}PO₄, où x+y=1 (LMFP) ; et les oxydes stratifiés riches en lithium Li₁₊ₓTM₁₋ₓO₂, TM étant un mélange d'au moins deux métaux de transition (LRLO), en particulier, les métaux de transition étant choisis dans le groupe constitué par Mn, Ni, et Co ; et des combinaisons de ceux-ci ; et des combinaisons de ceux-ci ;
ii) un additif conducteur, et
iii) un catholyte stable à haute tension comprenant :
- un sel de lithium choisi dans le groupe constitué par LiTFSI, LiBOB, LiDFOB ; UBF₄, LiFSI, LiClO₄, et des combinaisons de ceux-ci ;
- un liant polymère, le liant polymère étant un copolymère PVdF ;
- un liquide ionique à température ambiante ;
- un cristal plastique choisi dans le groupe constitué par le succinonitrile, le glutaronitrile, l'adiponitrile, le pimélonitrile, le subéronitrile, et des mélanges de ceux-ci ; et
- éventuellement, un solvant à point d'ébullition élevé ayant un point d'ébullition d'au moins 160 °C ;
l'électrode positive étant **caractérisée en ce qu'**elle a une densité de 2,3 g/cm³ à 3,6 g/cm³.

2. Électrode positive selon la revendication 1, dans laquelle l'électrode positive a une charge de matériau actif de 0,5 mAh/cm² à 10 mAh/cm².

3. Électrode positive selon les revendications 1 ou 2, dans laquelle le copolymère PVdF est choisi dans le groupe constitué par le poly(fluorure de vinylidène-co-hexafluoropropylène) (PVdF-HFP), le poly(fluorure de vinylidène-co-chlorotrifluoroéthylène) (PVdF-CTFE), le poly(fluorure de vinylidène-co-trifluoroéthylène) (PVdF-TrFE), et des mélanges de ceux-ci.

4. Électrode positive selon l'une quelconque des revendications 1 à 3, dans laquelle le liant polymère est dans une quantité de 1 % en poids à 7 % en poids du poids total de la cathode ; éventuellement, dans laquelle le liant est du PVdF-HFP.

5. Électrode positive selon l'une quelconque des revendications 1 à 4, dans laquelle le liquide ionique à température ambiante est choisi dans le groupe constitué par :
1-éthyl-3-méthylimidazolium bis(trifluorométhylsulfonyl)imide (EMI-TFSI) ;
1-méthyl-3-propylimidazolium bis(trifluorométhylsulfonyl)imide (PMI TFSI) ;
1,2-diméthyl-3-propylimidazolium bis(trifluorométhylsulfonyl)imide (DMPI TFSI) ;
1-butyl-3-méthylimidazolium bis(trifluorométhylsulfonyl)imide (BMI TFSI) ;
1-méthyl-1-propylpyrrolidinium bis(trifluorométhylsulfonyl)imide (PYR₁₃TFSI) ;
1-butyl-1-méthylpyrrolidinium bis(trifluorométhylsulfonyl)imide (PYR₁₄TFSI) ;
1-méthyl-1-propylpipéridinium bis(trifluorométhylsulfonyl)imide (PP₁₃TFSI) ;
1-éthyl-3-méthylimidazolium bis(fluorosulfonyl)imide (EMI-FSI) ;
1-méthyl-3-propylimidazolium bis(fluorosulfonyl)imide (PMI FSI) ;
1,2-diméthyl-3-propylimidazolium bis(fluorosulfonyl)imide (DMPI FSI) ;
1-butyl-3-méthylimidazolium bis(fluorosulfonyl)imide (BMI FSI) ;
1-méthyl-1-propylpyrrolidinium bis(fluorosulfonyl)imide (PYR₁₃FSI) ;
1-butyl-1-méthylpyrrolidinium bis(fluorosulfonyl)imide (PYR₁₄FSI) ;
1-méthyl-1-propylpipéridinium bis(fluorosulfonyl)imide (PP₁₃FSI) ;
et des combinaisons de ceux-ci.

6. Électrode positive selon la revendication 5, dans laquelle le liquide ionique à température ambiante est du PYR₁₄TFSI.

7. Électrode positive selon l'une quelconque des revendications 1 à 6, dans laquelle la quantité totale de RTIL, de cristal plastique, et, éventuellement, de solvant à point d'ébullition élevé est de 1 % en poids à 20 % en poids du poids total de la cathode.

8. Électrode positive selon l'une quelconque des revendications 1 à 7, dans laquelle le sel de lithium comprend du LiBOB, en particulier, dans laquelle le sel de lithium est un mélange de LiBOB et de LiTFSI, plus particulièrement, dans laquelle le sel de lithium est du LiBOB.

9. Électrode positive selon l'une quelconque des revendications 1 à 8, dans laquelle le sel d'électrolyte est dans une quantité de 1 % en poids à 15 % en poids du poids total de la cathode.

10. Électrode positive selon l'une quelconque des revendications 1 à 9, dans laquelle le matériau actif de cathode haute tension est du NMC, en particulier un NMC monocristallin.

11. Électrode positive selon l'une quelconque des revendications 1 à 10, dans laquelle le catholyte est dans une quantité de 5 % en poids à 50 % en poids par rapport au poids total de l'électrode positive ; le matériau actif de cathode haute tension est dans une quantité de 50 % en poids à 90 % en poids du poids total de l'électrode positive ; et l'additif conducteur est dans une quantité de 0,1 % en poids à 5 % en poids du poids total de l'électrode positive.

12. Procédé de préparation d'une électrode positive telle que définie dans l'une quelconque des revendications 1 à 11, le procédé comprenant les étapes suivantes :
i) fournir une formulation de catholyte comprenant : le sel de lithium, le liant polymère, le cristal plastique, le liquide ionique, et, éventuellement, le solvant à point d'ébullition élevé, dans un solvant approprié ;
ii) ajouter sous agitation à la formulation liquide de catholyte de l'étape (i) le matériau actif de cathode haute tension, l'additif conducteur et, éventuellement, une quantité supplémentaire du solvant approprié afin d'obtenir une suspension d'électrode positive ;
iii) couler la suspension d'électrode positive sur un collecteur de courant à électrode positive et la sécher afin d'obtenir une électrode positive ;
iv) calandrer l'électrode positive afin d'obtenir une électrode positive calandrée ;
v) presser à chaud l'électrode positive calandrée afin d'obtenir l'électrode positive finale.

13. Batterie comprenant :
- une électrode positive telle que définie dans l'une quelconque des revendications 1 à 11,
- une anode, et
- un électrolyte solide interposé entre l'électrode positive et l'anode.

14. Batterie selon la revendication 13, dans laquelle l'électrolyte solide et le catholyte ont la même composition.

15. Article de fabrication comprenant la batterie telle que définie dans la revendication 14.
